# EUROPÄISCHE PATENTSCHRIFT

(11) **EP 1 445 013 B1**
(45) Veröffentlichungstag und Bekanntmachung des Hinweises auf die Patenterteilung: **27.09.2006**
(21) Anmeldenummer: 03002815.3
(22) Anmeldetag: 07.02.2003
(51) Int. Cl.: B01D 63/10, B01D 65/00

(54) **Vorrichtung zum Filtern und Trennen von Strömungsmedien**
Device for filtration and separation of fluids
Dispositif pour la filtration et la séparation des fluides

(43) Veröffentlichungstag der Anmeldung: 11.08.2004
(73) Patentinhaber: Rochem RO-Wasserbehandlung GmbH, 21077 Hamburg (DE)
(72) Erfinder: Heine, Wilhelm, 21077 Hamburg (DE)
(74) Vertreter: Niedmers, Ole

(56) Entgegenhaltungen:
- EP-A- 0 347 174
- EP-A- 0 486 190
- EP-A- 1 022 052
- EP-A- 1 029 583
- US-A- 5 580 452
- PATENT ABSTRACTS OF JAPAN vol. 1998, no. 14, 31. Dezember 1998 (1998-12-31) -& JP 10 230145 A (NITTO DENKO CORP), 2. September 1998 (1998-09-02)
- PATENT ABSTRACTS OF JAPAN vol. 017, no. 167 (C-1043), 31. März 1993 (1993-03-31) & JP 04 326926 A (NITTO DENKO CORP), 16. November 1992 (1992-11-16)
- PATENT ABSTRACTS OF JAPAN vol. 2002, no. 02, 2. April 2002 (2002-04-02) & JP 2001 293338 A (KURITA WATER IND LTD), 23. Oktober 2001 (2001-10-23)

## Beschreibung

Die Erfindung betrifft eine Vorrichtung zum Filtern und Trennen von Strömungsmedien mittels Membranen, insbesondere nach der Methode der Ultrafiltration, der Umkehrosmose und der Nanofiltration, umfassend ein im wesentlichen druckdichtes Gehäuse, in dem die Membranen angeordnet sind, sowie einen Einlaß für das in die Vorrichtung geführte zu trennende Strömungsmedium und Auslässe für das aus der Vorrichtung herausgeführte Permeat sowie das Retentat, wobei die Membranen nach Art von Membrankissen ausgebildet sind und eine Mehrzahl von Membranen nach Art einer mehrlagigen Spirale um ein die Vorrichtung im wesentlichen durchquerendes Rohrelement aufeinandergewickelt sind, und wobei ein Ende der jeweiligen Membrankissen eine Permeatablauföffnung aufweist, die mit entsprechenden Permeateinlauföffnungen des Rohrelementes in Verbindung stehen.

Aus der EP-A-1 029 583 ist eine Vorrichtung dieser Art bekannt. Die bekannte Vorrichtung weist eine eigentliche Trenneinheit auf, die als vorkonfektioniertes Ge- und Verbrauchsteil ausgebildet ist, d.h. sie ist nach ihrer Herstellung aufgrund der Wickeltechnik der Membranelemente und deren gezielter Befestigung auf dem Rohrelement und der anschließenden Umhüllung der mehrlagigen Spiralen nach ihrer Verdichtung in die dann eingenommene bzw. einzunehmende Endstellung bei auftretenden Defekten nicht mehr reparabel, d.h. dann, wenn die Trenneinheit defekt geworden ist, wird sie aus der Vorrichtung entfernt und entsorgt.

Eine andere bekannte Vorrichtung wird in der EP-B-0 289 740 beschrieben. Bei dieser Vorrichtung wird das zu trennende Medium über einen Stapel von einzelnen Membranelementen geleitet, die mittels von jeweils zwischen den Membran- elementen angeordneten Abstandselementen, auf denen die Membranelemente abgestützt werden, umflossen werden. Die Membranelemente sind dabei nach Art sogen. Membrankissen (Kissenmembranen), Membrantaschen) ausgebildet, wobei das zu trennende Strömungsmedium, vielfach auch Rohmedium genannt, die stapelförmig angeordneten Membranelemente vom Einlaß der Vorrichtung zum Auslaß der Vorrichtung mäanderförmig umströmt.

Das Permeat selbst wird im Inneren der Membrankissen gesammelt, zu einer zentralen Permeatabflußöffnung des Permeatkissens geleitet und von dort über ein regelmäßig die Vorrichtung durchquerendes Permeatsammelrohr geleitet und von diesem nach außen abgeführt.

Es versteht sich von selbst, daß aufgrund der mäanderförmigen Führung des zu trennenden Strömungsmediums um die einzelnen Membranelemente herum vom Einlaß der Vorrichtung bis zum Auslaß der Vorrichtung, durch die das Strömungsmedium in aufkonzentrierter Form, d.h. als Retentat, die Vorrichtung verläßt, ein erheblicher Druckabfall vom Einlaß zum Auslaß stattfindet, der um so größer ist, je größer die Anzahl der aufeinandergestapelten Membranen in der Vorrichtung ist. Derartige Vorrichtungen lassen sich i.d.R. nur dann sinnvoll betreiben, wenn ausreichend Energie zur Verfügung steht, um am Eingang der Vorrichtung einen sehr hohen Druck auf das zu trennende Medium auszuüben. Der Betrieb derartiger Vorrichtungen, die sich in bezug auf ihre Trennfunktion im praktischen Einsatz sehr bewährt haben, ist sehr energieintensiv. Zwar ist es theoretisch möglich, die Trennleistung derartiger Vorrichtungen durch Vergrößerung der Anzahl der Membranelemente pro Vorrichtung zu erhöhen, einher damit geht aber eine Erhöhung des Energiebedarfs zum Betrieb derartiger Vorrichtungen aufgrund des vorangehend aufgezeigten Prinzips.

Man hat versucht, den Energiebedarf derartiger Vorrichtungen bei gleichbleibender Membranfläche zu vermindern, indem man bspw. das Strömungsmedium nicht mäanderförmig vom Einlaß zum Auslaß der Vorrichtung über die Membranelemente leitete, sondern diese parallel hintereinander vom Strömungsmedium überstreichen ließ, d.h. der Weg des Strömungsmediums durch die Vorrichtung war ein im wesentlichen linearer, wobei die Membranelemente in Strömungsrichtung angeordnet wurden. Ein typischer Vertreter einer derart aufgebauten Vorrichtung ist bspw. in der EP-B-0 707 884 beschrieben. Auch hier wurde, wenn das Bedürfnis nach höherer Trennleistung bestand, ein weiterer Satz von im wesentlichen linear zur Strömungsrichtung angeordneten Membranelementen in der Vorrichtung angeordnet, wobei diese Vergrößerung der effektiven Membranfläche pro Vorrichtung an sich auf elegante Weise durch modulartige Verlängerung der Vorrichtung bewerkstelligt werden konnte.

Diese Vorrichtung selbst zeichnet sich gegenüber der Vorrichtung gemäß der EP-B-0 284 740 dadurch aus, daß sie tatsächl ich einen sehr viel geringeren Energiebedarf bei angenommener gleicher Trennleistung wie die erstgenannte Vorrichtung zeigt.

Die aus der EP-B-0 284 740 und der EP-B-0 707 884 bekannten Vorrichtungen weisen aber aufgrund ihrer jeweiligen konstruktiv bedingten Form und Bauweise in bezug auf die Anzahl der in der Vorrichtung bzw. im Gehäuse der Vorrichtung unterbringbaren Membranelemente, d.h. der gesamten zur Verfügung stehenden Membranfläche, eine Begrenzung in bezug auf die darin unterbringbare Membranfläche als solcher auf.

Für bestimmte Anwendungen derartiger Vorrichtungen z. B. im Bereich von zivil und militärisch genutzten Schiffen bzw. Booten, ist einerseits das Erfordernis eines geringen Energiebedarfs beim Betrieb einer derartigen Vorrichtung unabdingbar und zum anderen eine hohe Effektivität, d.h. eine hohe Trennleistung, und das bei möglichst geringem Platzbedarf.

Es ist somit Aufgabe der vorliegenden Erfindung, eine Vorrichtung zu schaffen, die die Vorzüge der vorgenannten Arten von Vorrichtungen dieser Art in sich vereint, insbesondere aber mit dem Ziel einer Unterbringung einer sehr großen Membranfläche in einer derartigen Vorrichtung und eines möglichst geringen hydraulischen Widerstands, den die Vorrichtung für ein durch die Vorrichtung geleitetes, zu trennendes Strömungsmedium ausübt, wobei die Vorrichtung zudem noch einen sehr einfachen Aufbau aufweist und auch mit weitaus niedrigeren Kosten als die bisherigen bekannten Vorrichtungen realisiert werden kann, wobei die Vorrichtung auch zum Austausch gegen bisherige Vorrichtungen der bekannten Art geeignet sein soll, ohne daß ein größerer Platzbedarf als bisher bei geringerem Energiebedarf und höherer Trennleistung als bisher erforderlich ist.

Gelöst wird die Aufgabe gemäß der Erfindung dadurch, daß in der Innenbohrung des Rohrelementes eine darin einschiebbare und daraus entfernbare stangenförmige Permeatablauf- und Sammeleinrichtung aufgenommen wird, wobei die Permeateinlauföffnung des Rohrlelementes in durch axiale Nuten gebildete Permeateinlauföffnungen der Permeatablauf- und Sammeleinrichtung münden.

Der Vorteil der erfindungsgemäßen Lösung besteht, wie auch aufgabengemäß angestrebt, im wesentlichen darin, daß die Vorteile der bekannten Vorrichtung mit der linearen Durchströmung der Vorrichtung mit Strömungsmedium und der darin in linearer Strömungsrichtung angeordneten Membranen mit denen der bewährten Vorrichtungen mit der bewährten mäanderförmigen Durchströmung der Vorrichtung bzw. der mäanderförmigen Umströmung der aufeinandergestapelten Membranelemente verbunden werden können.

Der Vorteil der erfindungsgemäßen Vorrichtung liegt aber darüber hinaus auch darin, daß der erfindungsgemäße Aufbau der Vorrichtung quasi einen "offenen Kanal" für das Strömungsmedium vom Einlaß zum Auslaß des Strömungsmediums schafft und zudem eine mehr als vierfach größere Membranfläche in der Vorrichtung untergebracht werden kann bei gleichen äußeren Abmessungen der erfindungsgemäßen Vorrichtung gegenüber den bisher bekannten, oben beschriebenen Vorrichtungen.

Durch die erfindungsgemäß vorgeschlagene Lösung ist auch ein sehr viel einfacherer Aufbau der Vorrichtung gegenüber dem Aufbau der bekannten Vorrichtung realisierbar, da keine konstruktiven Maßnahmen gesonderter Art getroffen werden müssen, um die Membrankissen mechanisch zu positionieren und mechanisch zu stabilisieren, da durch die mehrelementige bzw. mehrlagige Spirale durch das Aufwickeln auf die die Vorrichtung im wesentlichen durchquerende, rohrförmige Permeatablauf- und Sammeleinrichtung, d.h. durch die dadurch erfolgte zwingende Krümmung der Membrankissen, eine eigenständige Stabilisierung der Membrankissen erreicht wird. Die Länge der einzelnen Membrankissen wird lediglich durch die Länge der Vorrichtung in ihrer Gesamtheit bestimmt bzw. begrenzt, d.h. letztlich durch das Gehäuse der Vorrichtung, in dem die Membrankissen, mehrelementig spiralförmig aufeinandergewickelt, aufgenommen werden. Die radiale Dicke der mehrelementigen Spirale wird lediglich durch die Anzahl der Membrankissen, die die mehrelementige Spirale bilden, bestimmt und durch die Breite der einzelnen Membrankissen.

Das in der Vorrichtung zu trennende Strömungsmedium kann also quer zur mehrelementigen Spirale, zwischen allen Membrankissen gleichzeitig vom Einlaß zum Auslaß der Vorrichtung strömen, und zwar nach Art eines offenen Kanals für das zu trennende Strömungsmedium und dabei jedes Membrankissen gleichzeitig und beidseitig vollflächig umströmen.

Dadurch, daß die mehrelementige Spirale aufeinander auf ein gesondertes Rohrelement gewickelt wird, wobei das Rohrelement in seiner Innenbohrung die besagte Permeatablauf- und Sammeleinrichtung aufnimmt, d.h., daß die Trenneinheit derart konfektioniert lediglich auf die stangenförmige Permeatablauf- und Sammeleinrichtung aufgeschoben zu werden braucht bzw. von dieser herabgezogen zu werden braucht, ist es möglich, einerseits die Vorkonfektionierbarkeit der Trenneinheit zu erhöhen und andererseits bei Defekten der Spirale bzw. der Spiralen die Trenneinheit ohne großen Aufwand aus der Vorrichtung entfernen zu können und gegen eine andere funktionsfähige Trenneinheit ersetzen zu können, ohne daß die die Vorrichtung im wesentlichen linear bzw. axial durchquerende stangenförmige Permeatablauf- und Sammeleinrichtung entfernt werden muß oder diese gar austauschen zu müssen.

Das einzelne Membrankissen weist dabei vorzugsweise eine rechteckförmige Kontur auf, wobei an einer Seite, an einer Stirnseite, die Permeatauslauföffnung ausgebildet ist. Diese Art der Ausgestaltung des Membrankissens hat den Vorteil gegenüber bekannten Membrankissen, bei denen die Permeatauslauföffnung i.d.R. durch eine quer zur Membranoberfläche ausgebildete, regelmäßig kreisförmige Auslauföffnung ausgebildet ist, die in einem gesonderten Arbeitsvorgang ausgebildet werden muß, nachdem das Membrankissen hergestellt worden ist. Bekannte Membrankissen dieser Art weisen zuweilen eine Mehrzahl derartiger quer zur Membranoberfläche ausgebildeter Permeatauslauföffnungen auf. Das erfindungsgemäß vorteilhafte Membrankissen, das hier zur Anwendung kommen kann, ist lediglich an drei Seiten durch Schweißung und/oder Klebung der das Membrankissen bildenden einzelnen Membranelemente verschlossen.

Es ist möglich, die Vorrichtung derart auszubilden, daß in dieser vorzugsweise wenigstens ein Satz von Membrankissen vorhanden ist, die die mehrelementige Spirale, wie sie vorangehend beschrieben worden ist, bilden, aufgenommen wird. Es ist aber auch möglich, in der Vorrichtung eine Mehrzahl von gesonderten Sätzen von Membrankissen, linear hintereinandergeschaltet, vorzusehen, die jeweils eine gesonderte mehrelementige Spirale bilden, wie es vorangehend beschrieben worden ist. So ist es bspw. bei einer solchen modifizierten Ausgestaltung möglich, pro Durchlauf des zu trennenden Mediums durch die Vorrichtung, entsprechend der gewählten Art der Membranelemente, die die jeweiligen Sätze der mehrlagigen Spiralen bilden, unterschiedliche Derivate aus dem zu trennenden Medium zu trennen, je nach Wahl der eingesetzten Art der einzelnen Membranen.

Um einen möglichst gleichbleibenden Abstand der einzelnen Membrankissen, die die mehrelementige Spirale bilden, zu gewährleisten, mit dem Ziel, einen möglichst ungestörten linearen Strömungskanal durch die Vorrichtung zu gewährleisten, ist es vorteilhaft, die die mehrelementige Spirale bildenden Membrankissen durch eine Mehrzahl eine mehrelementige zweite Spirale bildenden Abstandselementen voneinander beabstandet zu halten. Selbst wenn die einzelnen Membrankissen nach der Fertigstellung der Spirale und ihrer entsprechenden Fixierung in dieser Position quasi eng aufeinanderliegen, gewährleisten die auf gleiche Weise wie die Membrankissen spiralförmig zwischen den Membrankissen angeordneten Abstandselemente immer einen nicht verschließbaren Strömungskanal für das zu trennende Medium.

Die Abstandselemente sind vorteilhafterweise derart gestaltet, daß sie eine gitterförmige Struktur aufweisen, so daß die Abstandselemente die jeweils benachbarten Membrankissen nur infinitesimal berühren. Dadurch ist gewährleistet, daß die Abstandselemente den auf das Strömungsmedium ausgeübten Strömungswiderstand vernachlässigbar klein halten.

Die gitterförmige Struktur der Abstandselemente wird vorteilhafterweise durch eine Mehrzahl von sich im wesentlichen rechtwinkelig kreuzenden stabförmigen ersten und zweiten Elementen gebildet, wobei die ersten Elemente im Querschnitt größer ausgebildet sind als die zweiten Elemente, und wobei die ersten, im Querschnitt größer ausgebildeten Elemente im wesentlichen parallel zur Strömungsrichtung des zu trennenden Mediums zwischen den Membrankissen angeordnet bzw. ausgerichtet sind und demgemäß die zweiten Elemente mit dem kleineren Querschnitt quer dazu, so daß die zweiten, im Querschnitt kleineren Elemente die Möglichkeit schaffen, daß das zu trennende Strömungsmedium zwischen den benachbarten Oberflächen der Membranelemente und den zweiten Elementen störungsfrei hindurchfließen kann.

Um selbst den Strömungswiderstand, den diese bei der erfindungsgemäß vorgeschlagenen Anordnung bzw. Ausrichtung zwischen den Membranelementen ausüben, selbst so gering wie möglich zu halten, sind deren Querschnitte im wesentlichen kreisförmiger Struktur, wobei das Abstandselement selbst, ggf. auch einstückig, aus einem elastischen bzw. elastomeren Werkstoff hergestellt werden kann, so daß bei einfacher und kostengünstiger Herstellbarkeit auch eine problemlose Anpassung an die aufeinandergewickelten Membranelemente der mehrelementigen Spirale möglich ist.

Im Inneren der Membranelemente ist vorzugsweise zwischen den das Membrankissen bildenden Membranelementen wenigstens ein Zwischenelement angeordnet, das neben einer das Membrankissen stabilisierenden Funktion auch eine Drainagefunktion hat, d.h., daß es dem durch die Membranelemente des Membrankissens permeierenden Permeat leichter möglich ist, zur Permeatablauföffnung des Membrankissens zu fließen.

Um es dem Permeat zu erlauben, noch besser abzufließen, ist es vorteilhaft, als Zwischenelement ein Element mit einer vliesähnlichen Struktur vorzusehen, so daß das Permeat nicht nur beidseitig der Oberfläche des Zwischenelements, sondern auch im Zwischenelement selbst fließen kann.

Um die Spirale aus einer Mehrzahl von Membrankissen und einer Mehrzahl von Abstandselementen nach dem Aufwikkelvorgang in seiner bestimmungsgemäßen Endform, die dann einen im wesentlichen eine kreisförmige Querschnittstruktur aufweisenden Formkörper bildet, zu halten, ist es ebenfalls vorteilhaft, die Spirale an ihrem Außenumfang mit fadenartigen Elementen zu umwickeln, wobei dieses ein einziges fadenartiges Element sein kann, das nach Art eines Spulenwickels um den fertiggestellten Spiralkörper aufgespult wird, es ist aber auch möglich, dazu eine Mehrzahl fadenartiger Elemente vorzusehen, die jeweils einen bestimmten Bereich des Spiralkörpers umwickeln.

Vorzugsweise wird das fadenartige Element mit einem aushärtbaren Harz oder Kunststoff derart getränkt bzw. beaufschlagt, daß das fadenartige Element bzw. die fadenartigen Elemente nach erfolgter Umwicklung der Spirale bzw. des gesamten Spiralkörpers erstarrt.

Dadurch wird dann die Spirale bzw. der Spiralkörper nach der endgültigen Fertigstellung in seiner angestrebten konstruktiven Endstellung fixiert und ist gehindert, durch den den Membrankissen und den Abstandselementen bzw. den Zwischenelementen in den Membrankissen innenwohnenden Rückstellkräften gehindert, wieder in die im wesentlichen ebene Ausgangsstellung zurückzufedern.

Gemäß einer weiteren vorteilhaften anderen Ausgestaltung der Vorrichtung sind die mehrelementigen Spiralen (aus Membrankissen und aus Abstandselementen) sowie die Permeatablauf- und Sammeleinrichtung jeweils beidseitig mit gegenüber dem Gehäuse druckdicht die Spirale bzw. die Spiralen und die Permeatablauf- und Sammeleinrichtung begrenzenden Abschlußelementen versehen, an denen jeweils wenigstens ein Einlaß für das zu trennende Medium und jeweils wenigstens ein Auslaß für das Retentat vorgesehen ist. Die Abflußelemente bilden dabei zusammen mit dem Gehäuse den druckdicht verschlossenen Innenraum der Vorrichtung, durch den das zu trennende Strömungsmedium vom Einlaß zum Auslaß, die spiralförmig aufeinandergewickelten Membrankissen linear beidseitig überströmend, durchfließt.

In der Vorrichtung bildet vorzugsweise im wesentlichen die Spirale bzw. bilden die Spiralen, die Permeatablauf- und Sammeleinrichtung sowie die Abflußelemente eine in das Gehäuse einbringbare und aus diesem entfernbare Trenneinheit, womit gewährleistet ist, daß die Trenneinheit bei Defekten, bei Wartungsarbeiten und bei sonstigen Überprüfungsarbeiten leicht aus der Vorrichtung entfernt werden kann bzw. in diese eingesetzt werden kann, wobei lediglich dafür eines der die Trenneinheit beidseitig begrenzenden Abschlußelemente aus dem Gehäuse der Vorrichtung entfernt zu werden braucht.

Somit ist bei dieser Ausgestaltung der Vorrichtung ein leichter Austausch der Trenneinheit gewährleistet.

Dabei ist es vorteilhaft, das Rohrelement aus einem Kunststoffwerkstoff auszubilden, wodurch sich einerseits die Gestehungskosten sehr stark gegenüber einem metallischen Rohrelement verringern und daß durch geeignete Wahl des Kunststoffwerkstoffs des Rohrelementes auch eine Dichtung zwischen der Innenoberfläche des Rohrelementes und der Permeateinlauföffnung der Permeatablauf- und Sammeleinrichtung möglich ist, wobei die Permeateinlauföffnung durch eine axiale Nut bzw. eine Mehrzahl axialer Nuten um die Oberfläche der Permeatablauf- und Sammeleinrichtung herum angeordnete Nuten gebildet werden kann.

Um bei dieser Ausgestaltung der Vorrichtung das aus der Permeatablauföffnung der Membrankissen austretende Permeat über das Rohrelement in die Permeateinlauföffnung der Permeatablauf- und Sammeleinrichtung eintreten lassen zu können, weist das Rohrelement vorteilhafterweise eine Mehrzahl radialer Löcher auf, die einerseits mit den Permeatablauföffnungen der Membrankissen und andererseits mit den Permeateinlauföffnungen der Permeatablauf- und Sammeleinrichtung in Verbindung stehen.

Die Erfindung wird nun unter Bezugnahme auf die nachfolgenden schematischen Zeichnungen anhand eines Ausführungsbeispieles im einzelnen beschrieben. Darin zeigen:
- Fig. 1: im Schnitt die erfindungsgemäße Vorrichtung,
- Fig. 2: im Schnitt den Teil der Vorrichtung gemäß Fig. 1, der aus den aus Membrankissen und Abstandselementen bestehenden Spiralen besteht, die auf einem Rohrelement aufeinandergewickelt sind und auf die die Vorrichtung im wesentlichen durchquerende bolzenförmige Permeatablauf- und Sammeleinrichtung aufgeschoben werden kann,
- Fig. 3: einen Schnitt durch die Spiralen gemäß der Linie C-D gemäß Fig. 2, jedoch mit gegenüber der Fig. 2 in den Innenraum des Rohrelements eingesetzter Permeatablauf- und Sammeleinrichtung, in gegenüber Fig. 2 vergrößertem Maßstab sowie noch nicht aufeinandergewickelten Membrankissen und zwischen den Membrankissen angeordneten Abstandselementen, zur Erläuterung des Aufbaues der Erfindung,

- Fig. 4a: einen Ausschnitt des Abstandselementes im Schnitt in stark vergrößertem Maßstab in der Seitenansicht,
- Fig. 4b: das Abstandselement in stark vergrößertem Maßstab in der Draufsicht,
- Fig. 5: das erfindungsgemäß verwendete Membrankissen mit einseitiger Permeatablauföffnung,
- Fig. 6: einen Ausschnitt eines Schnittes entlang der Linie A-B von Fig. 5, den Aufbau eines Membrankissens mit Zwischenelement zeigend, und
- Fig. 7: einen Ausschnitt eines Schnittes entlang der Linie E-F von Fig. 5, den Aufbau eines Membrankissens zeigend, das kein Zwischenelement aufweist.

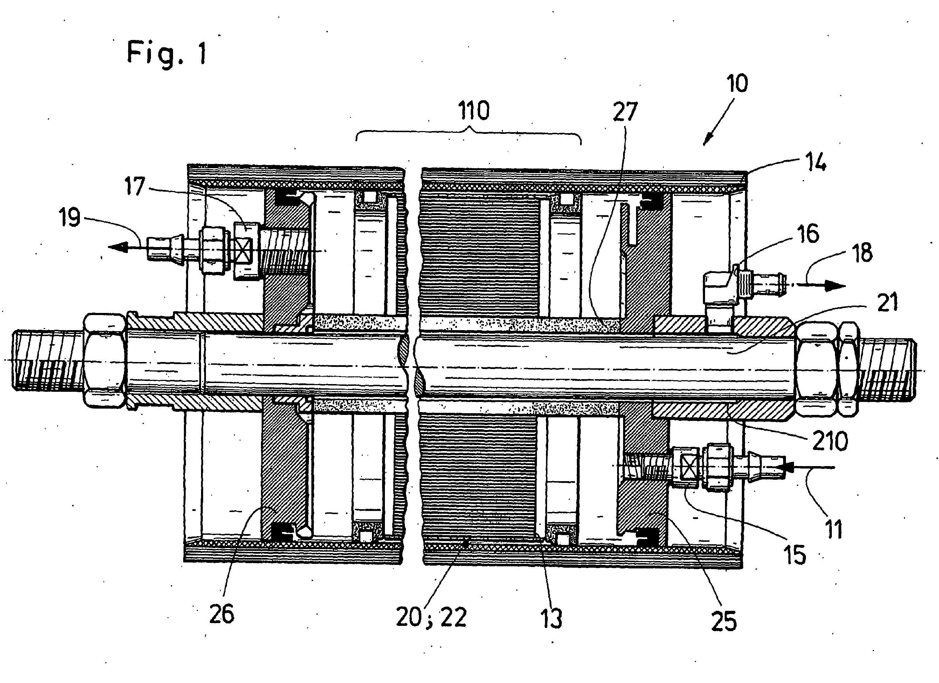

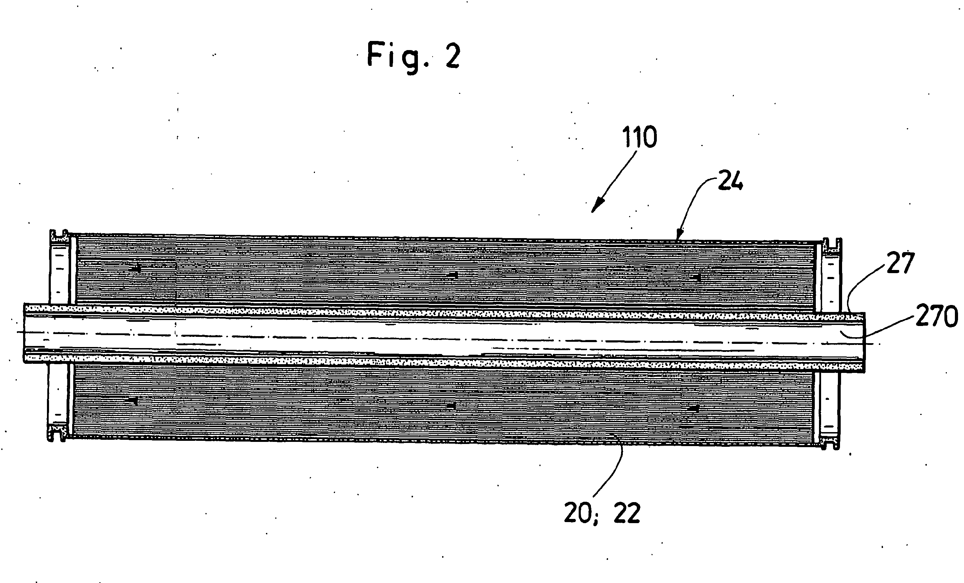

Bezüglich des Aufbaues des Vorrichtung 10 wird zunächst auf die Figuren 1 und 2 Bezug genommen. Die Vorrichtung 10 umfaßt ein druckdichtes Gehäuse 14, das hier in den Figuren als rohrzylinderförmiges Element ausgebildet ist. Im wesentlichen axial zum Gehäuse 14 ist eine die Vorrichtung 10 im wesentlichen durchquerende Permeatablauf- und Sammeleinrichtung 21 vorgesehen, die zusätzlich auch die Funktion eines Spannbolzens aufweist, der eine Trenneinheit 110 trägt bzw. zusammenhält, worauf noch weiter unten im einzelnen eingegangen wird.

Ein Teil der Trenneinheit 110 ist in Fig. 2 dargestellt, wobei diese Trenneinheit neben der die Vorrichtung 10 bolzenartig durchquerenden Permeatablauf- und Sammeleinrichtung 21 Abschlußelemente 25, 26 aufweist, die in Fig. 2 aus Übersichtlichkeitsgründen nicht dargestellt sind.

Auf der Permeatablauf- und Sammeleinrichtung 21 ist ein gesondertes Rohrelement 27 geschoben, das von der Permeatablauf- und Sammeleinrichtung 21 auch abgezogen werden kann.

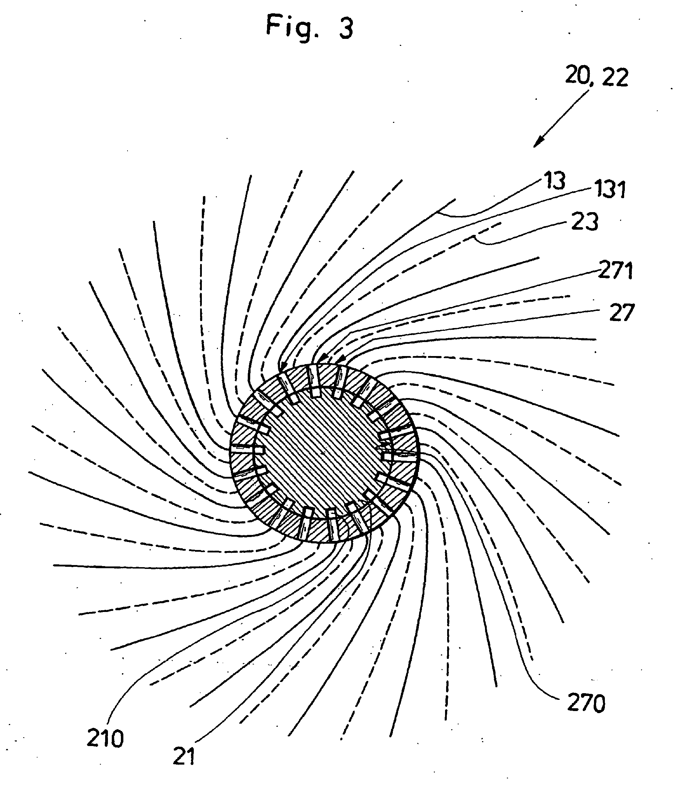

Auf dem gesonderten Rohrelement 27, das die Vorrichtung 10 ebenfalls im wesentlichen durchquert, d.h. in seiner axialen Länge geringfügig kleiner als die axiale Länge des Gehäuses 14 ist, ist eine Mehrzahl von Membranen, die nach Art von Membrankissen 13 ausgebildet sind, nach Art einer mehrelementigen bzw. mehrlagigen Spirale 20 aufeinandergewickelt, vgl. auch Fig. 3. In den Fig. 1 und 2 ist die mehrelementige Spirale 20 in ihrem endgültigen, aufeinandergewickelten Zustand dargestellt. Die Darstellung von Fig. 3, die einen Schnitt durch die Fig. 2 entlang der Linie C-D von Fig. 2 zeigt, jedoch in einem größeren Maßstab und bei, anders als in Fig. 2 dargestellt, in das Rohrelement 27 in dessen Innenbohrung 270 eingesetzter Permeatablauf- und Sammeleinrichtung 21, in nicht aufeinandergewickeltem Zustand die mehrelementige Spirale 20 aus einzelnen Membrankissen 13. Die in Fig. 3 dargestellten Membrankissen, dargestellt als durchgehende Linie, sind nicht maßstabsgerecht dargestellt. Bei einer realisierten Ausführungsform haben die Membrankissen bspw. eine Breite von 950 mm und eine Länge von 755 mm, wobei die Länge die effektive Länge des Membrankissens 13 in Richtung des Rohrelements 27 betrachtet ist. Die vorherigen Breiten- und Längenangaben bezüglich der Membrankissen beziehen sich lediglich auf ein mögliches Ausführungsbeispiel, es können aber in bezug auf die unterschiedliche Ausgestaltung der Vorrichtung 10 auch völlig andere Breiten und Längen der Membrankissen 13 vorgesehen werden.

Bei dem in Fig. 3 dargestellten Ausführungsbeispiel besteht die mehrelementige Spirale 20 aus 18 Membrankissen 13, wobei auch in diesem Falle darauf hinzuweisen ist, daß auch eine andere Anzahl von Membrankissen 13 die Spirale 20 bilden können.

Es sei ebenfalls darauf hingewiesen, daß die Darstellung von Fig. 3 lediglich schematisch für das bessere Verständnis der Vorrichtung 10 zu verstehen ist. Deshalb sind die einzelnen, die mehrelementige Spirale 20 bildenden Membrankissen 13 hier auch in einer quasi auseinandergezogenen Darstellung dargestellt.

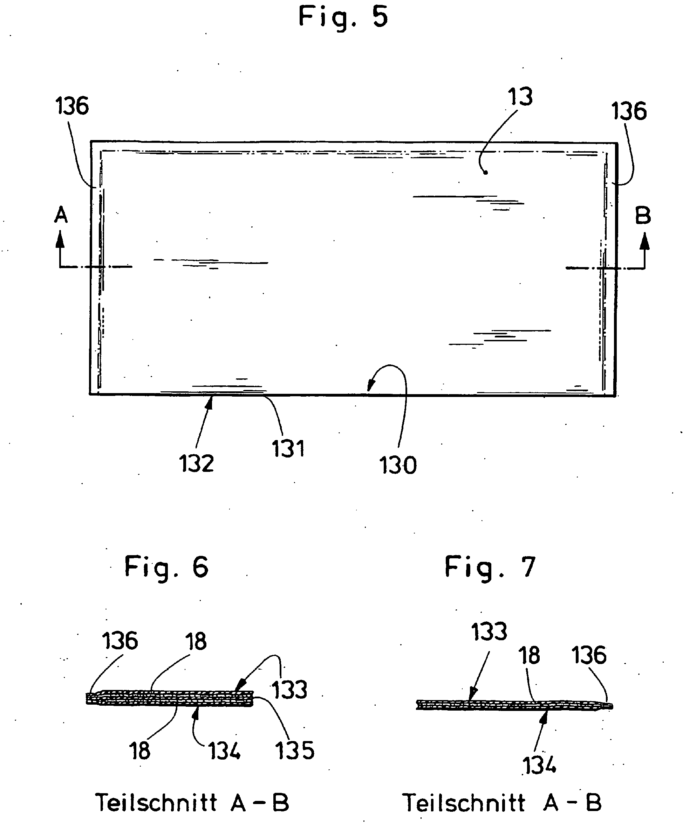

Die Membrankissen 13 haben einen Aufbau, wie er in den Fig. 5, 6 und 7 dargestellt ist, worauf noch weiter unten im einzelnen eingegangen wird. Im endgültig aufeinandergewickelten Zustand der mehrelementigen Spirale 20 nimmt die Spirale 20 eine Form an, wie sie in den Fig. 1 und 2 in der Seitenansicht im Schnitt dargestellt ist.

Die Membrankissen 13 der mehrelementigen Spirale 20 sind relativ zu dem Rohrelement 27 mit ihren Permeatablauföffnungen 131 derart angeordnet, daß die Permeatablauföffnungen 131 auf die radialen Löcher 271 gerichtet sind bzw. in diese münden, die in dem Rohrelement 27 ausgebildet sind, vgl. wiederum Fig. 3. So ist es möglich, daß das aus den Permeatablauföffnungen der Membranen 13 austretendes Permeat 18 in die radialen Löcher 271 eintreten kann und durch diese hindurch in die in der Innenbohrung 270 des Rohrelements 27 positionierten Permeateinlauföffnungen 210 der Permeatablauf- und Sammeleinrichtung 21 eintreten können und von dort, da die Permeateinlauföffnungen 210 in Form axialer Nuten auf der auf den Permeatablauf- und Sammeleinrichtung 21 ausgebildeten Permeateinlauföffnungen 210 zu einem an einem Ende der Permeatablauf- und Sammeleinrichtung 21 ausgebildeten Ringkanal geführt werden kann und von dort über einen Permeatauslaß 16 nach außen.

Es ist aber auch möglich, anstelle gesonderter nutförmiger Permeateinlauföffnungen 210 zwischen der Innenbohrung 270 des Rohrelements 27 und der die Vorrichtung 10 im wesentlichen durchquerenden bolzenförmigen Permeatablauf- und Sammeleinrichtung 21 einen ringförmigen Kanal vorzusehen, durch den dann das Permeat 18 zum Permeatauslaß 16 geführt wird.

Bei dem hier beschriebenen Ausführungsbeispiel der Vorrichtung 10 sind entsprechend der achtzehn Membrankissen 13 achtzehn radiale Löcher 271 im Rohrelement 27 vorgesehen. Längs des gesonderten Rohrelements 27 ist entsprechend der Länge der Membrankissen 13 eine Mehrzahl von radialen Löchern 271, in axialer Richtung reihenartig angeordnet, vorgesehen, um zu gewährleisten, daß ein möglichst gleichmäßiger Abfluß von die Membrankissen 13 verlassendem Permeat 18 gewährleistet ist.

Eine zweite mehrelementige Spirale 22 wird durch Abstandselemente 23 gebildet, die derart angeordnet sind, daß die die mehrelementige Spirale 20 bildenden Membrankissen 13 durch die besagte, durch eine Mehrzahl die mehrelementige zweite Spirale 22 bildenden Abstandselement 23 voneinander beabstandet gehalten werden. In Fig. 3 sind die Abstandselemente 23 im Gegensatz zu den Membrankissen 13 gestrichelt dargestellt.

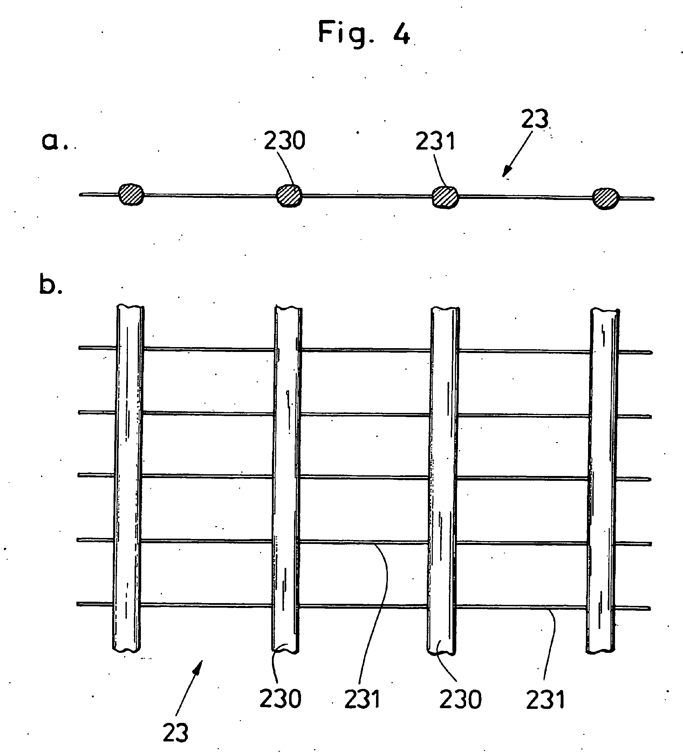

Die Abstandselemente 23, die annähernd eine Länge und eine Breite wie die Membrankissen 13 aufweisen, weisen eine gitterförmige Struktur auf, vgl. die Fig. 4a und 4b. Die Darstellungen der Abstandselemente 23 in den Fig. 4a und 4b sind zur Verdeutlichung des Aufbaus der Abstandselemente 23 vergrößert dargestellt. Die gitterförmige Struktur der Abstandselemente 23 wird durch eine Mehrzahl von sich im wesentlichen rechtwinkelig kreuzenden ersten und zweiten Elementen 230, 231 gebildet. Die Elemente 230, 231 sind stabförmig ausgebildet. Dabei sind die ersten Elemente 230 im Querschnitt größer ausgebildet als die zweiten Elemente 231. Die Abstandselemente 23 sind zur Ausbildung der mehrelementigen zweiten Spirale 22 in der Vorrichtung 10 bzw. relativ zu der mehrelementigen ersten Spirale 20 aus Membrankissen 13 derart angeordnet, daß die ersten Elemente 230 der Abstandselemente 23 im wesentlichen axial zum Rohrelement 27 bzw. zur bolzenförmigen Permeatablauf- und Sammeleinrichtung 21 ausgerichtet sind, so daß das die Spirale 20 bzw. 22 durchquerende, zu trennende Strömungsmedium 11 längs der zweiten Elemente 230 fließen kann, d.h. einen vernachlässigbar kleinen Strömungswiderstand für das zu trennende Strömungsmedium 11 bildet.

Die ersten und zweiten Elemente 230, 231 der Abstandselemente 23 weisen bei dem hier in den Fig. 4a und 4b dargestellten Ausführungsbeispiel eine im wesentlichen kreisförmige Struktur auf. Es sind aber grundsätzlich auch andere Querschnittsformen möglich, wenn bspw. gezielt eine turbulente Strömung des zu trennenden Strömungsmediums 11 beim Überfließen der Membrankissen 13 durch die mehrelementige Spirale 20 hindurch erreicht werden soll, was für speziell gewünschte Anwendungsfälle der Vorrichtung erforderlich sein kann. Die Abstandselemente 23 bestehen aus einem elastischen Werkstoff, bspw. Kunststoff, der ein elastomerer Kunststoff sein kann.

Wird die erste mehrelementige Spirale 20 aus Membrankissen 13 in ihre endgültige Form gebracht, vgl. die Fig. 1 und 2, schmiegen sich die zwischen den Membrankissen 13 angeordneten Abstandselemente 23 an die Oberfläche der jeweiligen benachbarten Membranelemente 133, 134 der jeweils benachbarten Membrankissen 13 an, verhindern aber, daß die jeweiligen Membranelemente 133, 134 der jeweils benachbarten Membrankissen 13 direkt aufeinanderliegen und somit einen Strömungskanal für das zu trennende Strömungsmedium 11 bilden, so daß dieses stirnseitig in die mehrelementige Spirale 20 aus Membrankissen 13 eintreten kann, vgl. Fig. 1 rechts, und nach dem Überstreichen der gesamten Länge der Membrankissen 13 aus der mehrelementige Spirale 20 wieder austreten kann, vgl. Fig. 1 links. Durch das Vorsehen der zwischen den Membranelementen der ersten mehrelementigen Spirale 20 positionierten Abstandselemente 23, die ebenfalls die mehrelementige zweite Spirale 22 bilden, ist immerwährend ein im Strömungsquerschnitt ausreichend großer Strömungskanal für das Strömungsmedium 11 gewährleistet.

Wenn die erste und die zweite mehrelementige Spirale 20, 22, die dann bei dem hier beschriebenen Beispiel aus sechsunddreißig Elementen bestehen würde, d.h. achtzehn Membrankissen 13 und achtzehn Abstandselementen 23, in ihre endgültige aufgewickelte Stellung gebracht wird, vgl. die Fig. 1 und 2, d.h., daß die Membranelemente liegen dann unter jeweiliger Zwischenpositionierung der Abstandselemente 23 aufeinander, werden die Spiralen 20, 22 an ihrem Außenumfang 24, vgl. Fig. 2, fixiert. Dieses kann bspw. dadurch geschehen, daß die Spiralen 20, 22 dann an ihrem Außenumfang 24 mit einem fadenartigen Element oder einer Mehrzahl fadenartiger Elemente umwickelt werden. Um den Spiralen 20, 22 noch im aufgewickelten Zustand eine höhere Festigkeit zu geben, kann man die fadenartigen Elemente mit einem aushärtbaren Harz oder Kunststoff tränken. Durch geeignete Beaufschlagung von Wärme oder aber durch geeignete Einstellung des Härtevorganges des Harzes oder Kunststoffes kann dann nach erfolgter Umwickelung der Spiralen 20, 22 ein Erstarrungsvorgang der fadenartigen Elemente induziert werden. Es ist aber auch möglich, die Spiralen 20, 22 an ihrem Außenumfang 24 bspw. mittels eines Bandes aus elastomerem Werkstoff nach Art einer Spule zu umwickeln.

Ein derart fertiggestellter Körper aus den Spiralen 20, 22, wie er bspw. in Fig. 2 dargestellt ist, wird dann auf die bolzenförmig die Vorrichtung 10 durchquerende Permeatablauf- und Sammeleinrichtung 21 geschoben. Beidseitig wird dann dieser Körper aus den mehrelementigen Spiralen 20, 22 sowie dem Rohrelement 27 mit jeweils beidseitig begrenzenden Abschlußelementen 25, 26 versehen, in denen jeweils wenigstens ein Einlaß 15 für das zu trennende Medium 11 und wenigstens ein Auslaß 17 für das Retentat 19 vorgesehen ist. Mit geeigneten Dichtmitteln sowie Überwurfhülsen werden die Abschlußelemente 25, 26 relativ zum Rohrelement 17 dichtend gehalten, wobei die Abschlußelemente 25, 26 Dichtmittel aufweisen, mit denen diese dann druckdicht gegenüber dem Gehäuse 14, vgl. Fig. 1, positioniert werden können, nachdem die Trenneinheit 110 aus den Spiralen 20, 22, der Permeatablauf- und Sammeleinrichtung 21 sowie der Abschlußelemente 25, 26 in das Gehäuse 14 eingebracht worden sind.

Die in der Vorrichtung 10 verwendeten Membrankissen 13 weisen im wesentlichen eine rechteckförmige Struktur auf, vgl. die Fig. 5.

Membrankissen 13 dieser Art sind bspw. in der EP-B-0 129 663 beschrieben und können auf bekannte Weise hergestellt werden.

Diese Membrankissen 13 bestehen regelmäßig aus zwei Membranelementen 133, 134 und sind in der Regel aus geeignetem Polymerwerkstoff hergestellt, wobei die Polymere derart gewählt werden, daß sie an die speziell mit der Vorrichtung 10 zu bewerkstelligenden Trennaufgabe, d.h. in Abhängigkeit des zu trennenden Strömungsmediums 11, ausgewählt werden. Die beiden Membranelemente 133, 134, vgl. auch die Fig. 6 und 7, sind an ihrem umlaufenden Rand 136 auf bekannte Weise bspw. mittels Ultraschallbehandlung verschweißt oder geeignet verklebt.

Das Besondere bei dem im Zusammenhang mit der erfindungsgemäBen Vorrichtung verwendeten Membrankissen 13 ist das, daß bei dem Membrankissen 13 an einer seiner Stirnseiten 132 die Permeatablauföffnung 131 ausgebildet ist; die mit den oben beschriebenen radialen Löchern 271 des Rohrelementes 27 derart fluchtet, daß das aus den Membrankissen 13 über die Permeatablauföffnung 131 austretende Permeat 18 in die radialen Löcher 271 des Rohrelements 27 eintreten kann. Im Inneren der Membrankissen 13, d.h. zwischen den das Membrankissen 13 bildenden Membranelementen 133, 134 kann wenigstens ein Zwischenelement 135 angeordnet sein, vgl. die Ausgestaltung des Membrankissens 13 gemäß Fig. 6. Das Zwischenelement 135 kann eine vliesähnliche Struktur aufweisen, wodurch das Permeat leichter zur Permeatablauföffnung 131 fließen bzw. abfließen kann. Grundsätzlich ist es aber auch möglich, vgl. die Ausgestaltung des Membrankissens 13 gem. Fig. 7, zwischen den Membranelementen 133, 134 kein Zwischenelement 135 vorzusehen.

### Bezugszeichenliste

- 10: Vorrichtung
- 110: Trenneinheit
- 11: Strömungsmedium
- 12:
- 13: Membran/Membrankissen
- 130: Ende Membrankissen
- 131: Permeatablauföffnung
- 132: Stirnseite
- 133: Membranelement
- 134: Membranelement
- 135: Zwischenelement
- 136: Rand
- 14: Gehäuse
- 15: Einlaß
- 16: Auslaß Permeat
- 17: Auslaß Retentat
- 18: Permeat
- 19: Retentat
- 20: Spirale (erste)
- 21: Permeatablauf- und Sammeleinrichtung
- 210: Permeateinlauföffnung (Permeatablauf- und Sammeleinrichtung)
- 22: Spirale (2.)
- 23: Abstandselement
- 230: stabförmiges erstes Gitterelement
- 231: stabförmiges zweites Gitterelement
- 24: Außenumfang (Spiralen)
- 25: Abschlußelement
- 26: Abschlußelement
- 27: Rohrelement
- 270: Innenbohrung
- 271: radiales Loch

## Patentansprüche

1. Vorrichtung (10) zum Filtern und Trennen von Strömungsmedien (11) mittels Membranen (13), insbesondere nach der Methode der Ultrafiltration, der Umkehrosmose und der Nanofiltration, umfassend ein im wesentlichen druckdichtes Gehäuse (14), in dem die Membranen (13) angeordnet sind, einen Einlaß (15) für das in die Vorrichtung (10) geführte zu trennende Strömungsmedium (11) und Auslässe (16, 17) für das aus der Vorrichtung (10) herausgeführte Permeat (18) sowie das Retentat (19), wobei die Membranen (13) nach Art von Membrankissen ausgebildet sind und eine Mehrzahl der Membranen (13) nach Art einer mehrelementigen Spirale (20) um ein die Vorrichtung (10) im wesentlichen durchquerendes Rohrelement (27) aufeinandergewickelt sind, und wobei ein Ende (130) der jeweiligen Membrankissen (13) eine Permeatablauföffnung (131) aufweist, die mit entsprechenden Permeateinlauföffnungen (271) des Rohrelementes (27) in Verbindung stehen, **dadurch gekennzeichnet, daß** in der Innenbohrung (270) des Rohrelementes (27) eine darin einschiebbare und daraus entfernbare stangenförmige Permeatablauf- und Sammeleinrichtung (21) aufgenommen wird, wobei die Permeateinlauföffnungen (271) des Rohrelementes (27) in durch axiale Nuten gebildete Permeateinlauföffnungen (210) der Permeatablauf- und Sammeleinrichtung (21) münden.

2. Vorrichtung (10) nach Anspruch 1, **dadurch gekennzeichnet, daß** das Membrankissen (13) eine rechteckförmige Kontur aufweist, wobei an einer seiner Stirnseiten (132) die Permeatablauföffnung (131) ausgebildet ist.

3. Vorrichtung (10) nach einem oder beiden der Ansprüche 1 oder 2, **dadurch gekennzeichnet, daß** in dieser wenigstens ein Satz von Membrankissen (13), die die mehrelementige Spirale (20) bilden, aufgenommen wird.

4. Vorrichtung (10) nach einem oder mehreren der Ansprüche 1 bis 3, **dadurch gekennzeichnet, daß** die die mehrelementige Spirale (20) bildenden Membrankissen (13) durch eine Mehrzahl eine mehrelementige zweite Spirale (22) bildenden Abstandselemente (23) voneinander beabstandet gehalten werden.

5. Vorrichtung (10) nach Anspruch 4, **dadurch gekennzeichnet, daß** die Abstandselemente (23) eine gitterförmige Struktur aufweisen.

6. Vorrichtung (10) nach Anspruch 5, **dadurch gekennzeichnet, daß** die gitterförmige Struktur durch eine Mehrzahl von sich im wesentlichen rechtwinkelig kreuzenden stabförmigen ersten und zweiten Elementen (230, 231) gebildet wird, wobei die ersten Elemente (230) im Querschnitt größer ausgebildet sind als die zweiten Elemente (231).

7. Vorrichtung (10) nach Anspruch 6, **dadurch gekennzeichnet, daß** die ersten und zweiten Elemente (230, 231) im Querschnitt eine im wesentlichen kreisförmige Struktur aufweisen.

8. Vorrichtung (10) nach einem oder mehreren der Ansprüche 4 bis 7, **dadurch gekennzeichnet, daß** das Abstandselement (23) aus einem elastischen bzw. elastomeren Werkstoff besteht.

9. Vorrichtung (10) nach einem oder mehreren der Ansprüche 1 bis 8, **dadurch gekennzeichnet, daß** im Inneren zwischen den das Membrankissen (13) bildenden Membranelementen (133, 134) wenigstens ein Zwischenelement (135) angeordnet ist.

10. Vorrichtung (10) nach Anspruch 9, **dadurch gekennzeichnet, daß** das Zwischenelement (135) eine vliesähnliche Struktur aufweist.

11. Vorrichtung (10) nach einem oder mehreren der Ansprüche 1 bis 10, **dadurch gekennzeichnet, daß** die Spirale (20; 22) an ihrem Außenumfang (24) mit einem fadenartigen Element umwickelt wird.

12. Vorrichtung (10) nach Anspruch 11, **dadurch gekennzeichnet, daß** das fadenartige Element mit einem aushärtbaren Harz oder Kunststoff getränkt ist derart, daß es nach erfolgter Umwickelung der Spirale (20; 22) erstarrt.

13. Vorrichtung (10) nach einem oder mehreren der Ansprüche 1 bis 12, **dadurch gekennzeichnet, daß** die mehrelementige Spirale (20; 22) sowie die Permeatablauf- und Sammeleinrichtung (21) jeweils beidseitig mit gegenüber dem Gehäuse (14) druckdicht die Spirale (20; 22) und die Permeatablauf- und Sammeleinrichtung (21) begrenzenden Abschlußelementen (25, 26) versehen sind, in denen jeweils wenigstens ein Einlaß (15) für das zu trennende Medium (11) und jeweils wenigstens ein Auslaß (17) für das Retentat (19) vorgesehen ist.

14. Vorrichtung (10) nach Anspruch 13, **dadurch gekennzeichnet, daß** im wesentlichen die Spirale (20; 22), die Permeatablauf- und Sammeleinrichtung (21) sowie die Abschlußelemente (25, 26) eine in das Gehäuse (14) einbringbare und aus diesem entfernbare Trenneinheit (110) bilden.

15. Vorrichtung (10) nach einem oder mehreren der Ansprüche 1 bis 14, **dadurch gekennzeichnet, daß** das Rohrelement (27) aus einem Kunststoffwerkstoff besteht.

## Claims

1. Device (10) for filtering and separating flowing media (11) by means of membranes (13), in particular using the method of ultra-filtration, reverse osmosis and nanofiltration, comprising an essentially pressure-tight housing (14) in which the membranes (13) are disposed, an inlet (15) for the flowing medium (11) fed into the device (10) to be separated and outlets (16, 17) for the permeate (18) and the retentate (19) directed out of the device (10), which membranes (13) are provided in the form of membrane pads and a plurality of membranes (13) are wound one after the other in the manner of a multi-element spiral (20) onto a tubular element (27) essentially extending through the device (10), and one end (130) of the respective membrane pads (13) has a permeate outlet orifice (131) which communicates with cooperating permeate inlet orifices (271) of the tubular element (27), **characterised in that** the internal bore (270) of the tubular element (27) accommodates a rod-shaped permeate discharge and collecting unit (21) which can be inserted therein and removed therefrom, and the permeate inlet orifices (271) of the tubular element (27) open into permeate inlet orifices (210) of the permeate discharge and collecting unit (21) provided in the form of axial grooves.

2. Device (10) as claimed in claim 1, **characterised in that** the membrane pads (13) have a rectangular contour and the permeate outlet orifice (131) is disposed on one of its end faces (13).

3. Device (10) as claimed in one or both of claims 1 or 2, **characterised in that** it accommodates at least one set of membrane pads (13) forming the multi-element spiral (20).

4. Device (10) as claimed in one or more of claims 1 to 3, **characterised in that** the membrane pads (13) forming the multi-element spiral (20) are held at a distance apart from one another by means of a plurality of spacer elements (23) forming a multi-element second spiral (22).

5. Device (10) as claimed in claim 4, **characterised in that** the spacer elements (23) have a lattice-shaped structure.

6. Device (10) as claimed in claim 5, **characterised in that** the lattice-shaped structure is formed by a plurality of rod-shaped first and second elements (230, 231) intersecting essentially at right-angles, which first elements (230) have a bigger cross-section than the second elements (231).

7. Device (10) as claimed in claim 6, **characterised in that** the first and second elements (230, 231) have an essentially circular structure in cross-section.

8. Device (10) as claimed in one or more of claims 4 to 7, **characterised in that** the spacer element (23) is made from an elastic or elastomeric material.

9. Device (10) as claimed in one or more of claims 1 to 8, **characterised in that** at least one intermediate element (135) is disposed in the interior between the membrane elements (133, 134) forming the membrane pad (13).

10. Device (10) as claimed in claim 9, **characterised in that** the intermediate element (135) has a non-woven type structure.

11. Device (10) as claimed in one or more of claims 1 to 10, **characterised in that** a filament-type element is wrapped around the external circumference (24) of the spiral (20; 22).

12. Device (10) as claimed in claim 11, **characterised in that** the filament-type element is impregnated with a curable resin or plastic so that it solidifies once it has been wrapped round the spiral (20; 22).

13. Device (10) as claimed in one or more of claims 1 to 12, **characterised in that** both ends of the multi-element spiral (20; 22) and the permeate discharge and collecting unit (21) are respectively provided with bounding closure elements (25, 26) to keep the spiral (20; 22) and permeate discharge and collecting unit (21) pressure-tight with respect to the housing (14), in each of which at least one inlet (15) for the medium (11) to be separated is provided and in each of which at least one outlet (17) for the retentate (19) is provided.

14. Device (10) as claimed in claim 13, **characterised in that** the spiral (20; 22), the permeate discharge and collecting unit (21) and the closure elements (25, 26) form a separation unit (110) which can be inserted in the housing (14) and removed from it.

15. Device (10) as claimed in one or more of claims 1 to 14, **characterised in that** the tubular element (27) is made from a plastic material.

## Revendications

1. Dispositif (10) destiné à filtrer et à séparer des fluides en écoulement (11) au moyen de membranes (13), notamment selon la méthode de l'ultrafiltration, de l'osmose inverse et de la nanofiltration, comportant un boîtier (14) sensiblement étanche à la pression, dans lequel sont disposées les membranes (13), un orifice d'admission (15) pour le fluide en écoulement (11) à séparer, guidé dans le dispositif (10), et des orifices d'évacuation (16, 17) pour le perméat (18) extrait du dispositif (10) ainsi que pour le rétentat (19), les membranes (13) étant conçues à la façon de coussins à membrane et une pluralité de membranes (13) étant enroulées les unes sur les autres, à la façon d'une spirale à éléments multiples (20), autour d'un élément tubulaire (27) traversant sensiblement le dispositif (10), et une extrémité (130) des coussins à membrane (13) respectifs comprenant une ouverture d'écoulement du perméat (131), en liaison avec les ouvertures d'introduction du perméat (271) correspondantes de l'élément tubulaire (27), **caractérisé en ce que** l'alésage interne (270) de l'élément tubulaire (27) reçoit un système de stockage et d'écoulement du perméat (21) en forme de tige, pouvant y être introduit et en être retiré, les ouvertures d'introduction du perméat (271) de l'élément tubulaire (27) débouchant dans des ouvertures d'introduction du perméat (210) du système de stockage et d'écoulement du perméat (21) formées par des rainures axiales.

2. Dispositif (10) selon la revendication 1, **caractérisé en ce que** le coussin à membrane (13) présente un contour rectangulaire, l'ouverture d'écoulement du perméat (131) étant formée sur un de ses côtés frontaux (13) du coussin.

3. Dispositif (10) selon l'une quelconque ou les revendications 1 et 2, **caractérisé en ce qu'**il reçoit un groupe de coussins à membrane (13), qui forment la spirale à éléments multiples (20).

4. Dispositif (10) selon l'une ou plusieurs des revendications 1 à 3, **caractérisé en ce que** les coussins à membrane (13) formant la spirale à éléments multiples (20) sont maintenus à distance les uns des autres par une pluralité d'éléments d'espacement (23) formant une seconde spirale à éléments multiples (22).

5. Dispositif (10) selon la revendication 4, **caractérisé en ce que** les éléments d'espacement (23) présentent une structure en forme de grille.

6. Dispositif (10) selon la revendication 5, **caractérisé en ce que** la structure en forme de grille est formée par une pluralité de premiers et seconds éléments (230, 231) en forme de barre se croisant sensiblement perpendiculairement, les premiers éléments (230) présentant une section transversale supérieure à celle des seconds éléments (231).

7. Dispositif (10) selon la revendication 6, **caractérisé en ce que** les premiers et seconds éléments (230, 231) présentent, en section transversale, une structure sensiblement circulaire.

8. Dispositif (10) selon l'une ou plusieurs des revendications 4 à 7, **caractérisé en ce que** l'élément d'espacement (23) est constitué d'un matériau élastique et/ou élastomère.

9. Dispositif (10) selon l'une ou plusieurs des revendications 1 à 8, **caractérisé en ce qu'**au moins un élément intermédiaire (135) est disposé à l'intérieur entre les éléments à membrane (133, 134) formant le coussin à membrane (13).

10. Dispositif (10) selon la revendication 9, **caractérisé en ce que** l'élément intermédiaire (135) présente une structure semblable à un non tissé.

11. Dispositif (10) selon l'une ou plusieurs des revendications 1 à 10, **caractérisé en ce que** la spirale (20 ; 22) est enveloppée sur sa périphérie extérieure (24) par un élément du type fil.

12. Dispositif (10) selon la revendication 11, **caractérisé en ce que** l'élément du type fil est imprégné d'une résine ou d'une matière plastique durcissable, de telle sorte qu'il est solidifié une fois l'enveloppement de la spirale (20 ; 22) effectué.

13. Dispositif (10) selon l'une ou plusieurs des revendications 1 à 12, **caractérisé en ce que** la spirale à éléments multiples (20 ; 22) ainsi que le système de stockage et d'écoulement du perméat (21) sont pourvus respectivement, de part et d'autre, d'éléments d'obturation (25, 26) délimitant de manière étanche à la pression la spirale (20 ; 22) et le système de stockage et d'écoulement du perméat (21) vis-à-vis du boîtier (14), éléments dans lesquels sont prévus respectivement au moins un orifice d'admission (15) pour le fluide (11) destiné à séparer et respectivement au moins un orifice d'évacuation (17) pour le rétentat (19).

14. Dispositif (10) selon la revendication 13, **caractérisé en ce que** sensiblement la spirale (20 ; 22), le système de stockage et d'écoulement du perméat (21) ainsi que les éléments d'obturation (25, 26) forment une unité de séparation (110) pouvant être insérée dans le boîtier (14) et retirée de celui-ci.

15. Dispositif (10) selon l'une ou plusieurs des revendications 1 à 14, **caractérisé en ce que** l'élément tubulaire (27) est constitué d'un matériau en matière plastique.
